Europäisches Patentamt

European Patent Office

Office européen des brevets

(11) Numéro de publication: **0 510 722 A1**

## (12) DEMANDE DE BREVET EUROPEEN

(21) Numéro de dépôt: **92109676.4**

(22) Date de dépôt: **24.03.89**

(51) Int. Cl.⁵: **G01N 15/12**

Cette demande a été déposée le 05 - 06 - 1992 comme demande divisionnaire de la demande mentionnée sous le code INID 60.

(30) Priorité: **28.03.88 FR 8804021**

(43) Date de publication de la demande:
**28.10.92 Bulletin 92/44**

(60) Numéro de publication de la demande initiale en application de l'article 76 CBE : **0 335 789**

(84) Etats contractants désignés:
**AT BE CH DE ES GB GR IT LI LU NL SE**

(71) Demandeur: **Melet, Francois**
**9, Chaussée Jules César**
**F-95520 Osny(FR)**

(72) Inventeur: **Melet, Francois**
**9, Chaussée Jules César**
**F-95520 Osny(FR)**

(74) Mandataire: **Rinuy, Santarelli**
**14, avenue de la Grande Armée**
**F-75017 Paris(FR)**

(54) **Analyseur hématologique automatique à circuit de liquide de lyse simplifié.**

(57) Cet analyseur comprend en combinaison un dispositif de prélèvement et de distribution (10) de sang total et d'un liquide de dilution, un circuit de sang dilué ou de liquide de dilution (30, 32, V12, 33, 34, 35, 40, 50, 142, V15, 70, 73 53; 80, 82, V16, 53) un circuit de liquide détergent (130, 144, V17, 143, 140, 146, 147, 148, V30, 115, 149, 53 ; 130, 144 V18, 243, 240, 246, 247, 248, V40, 115, 249, 53) et un circuit de liquide de lyse (135, V19, V21, 115, 299, 301, 34, 35).

Le circuit de liquide de lyse comporte une réserve de liquide de lyse (135) raccordée par un conduit (300), dit premier, muni d'une électrovanne interrupteur (V19), à un ségment de conduit (301) d'une contenance prédéterminée, ce segment de conduit étant compris entre un point de jonction (299) dudit premier conduit avec un conduit (302) d'arrivée d'air (115) commandée par une électrovanne interrupteur (V21) et un point déterminé (34) par la présence à proximité d'un dispositif de détection (350), ce dernier point (34) était raccordé à la cuve decomptage (80).

*FIG.1*

La présente invention concerne un analyseur hématologique automatique utilisant la technologie de micro-échantillonnage de sang et comprenant en combinaison :

un dispositif de prélèvement et de distribution de sang total et d'un liquide de dilution ,

un circuit de sang dilué ou de liquide de dilution comportant au moins une cuve de comptage des éléments figurés du sang,

un circuit de liquide détergent comprenant au moins une cuve de liquide détergent, chaque cuve de liquide détergent étant en communication constante par un micro-orifice avec une cuve de comptage associée,

le circuit de liquide détergent comprenant également un moyen de mesure associé à chaque cuve de détergent et apte en fonctionnement à déterminer le temps de passage par le micro-orifice d'un volume prédéterminé de sang dilué, de la cuve de comptage à la cuve de détergent,

un circuit de liquide de lyse de sang apte à être mis en communication avec une cuve de comptage,

les circuits comportant des vannes commandées et des détecteurs de la nature liquide ou gazeuse des fluides de circulation,

les circuits étant raccordés à un dispositif source de dépression/pression et à l'air ambiant pour la circulation de l'air et/ou des liquides,

le dispositif, les détecteurs, les vannes et chaque moyen de mesure étant commandés par une unité centrale de commande et de calcul.

De tels analyseurs sont disponibles commercialement, mais présentent l'inconvénient d'être complexes et par voie de conséquence d'avoir un prix de revient élevé. De tels analyseurs comportent par exemple un minimum de vingt quatre électrovannes.

La Demanderesse s'est fixée comme but de simplifier de tels analyseurs afin d'obtenir un appareil fiable, mais moins coûteux tout en conservant le micro-échantillonnage, la précision, la reproductibilité des mesures et le nombre de paramètres sanguins déterminables.

Selon un aspect de la présente invention le circuit de liquide détergent comporte à un niveau bas une réserve de liquide détergent raccordée par un conduit muni d'une vanne interrupteur à une cuve de liquide détergent située à un niveau moyen, elle-même raccordée à un conduit de mesure situé à un niveau haut, lui-même raccordé à un conduit pourvu d'une électrovanne inverseur apte à mettre ledit conduit de mesure en communication soit avec l'air ambiant, soit avec le dispositif source de dépression/pression.

Cette différence de niveaux: bas, moyen, haut permet d'obtenir en fonctionnement un effet de vase communicant entre le contenu liquide du conduit de mesure et la réserve de liquide détergent et donc une descente spontanée du liquide lorsque le conduit de mesure est en communication avec l'air et lorsque ladite vanne interrupteur est ouverte. Cette possibilité de descente spontanée simplifie considérablement le circuit de liquide détergent et par là contribue à la simplification de l'analyseur hématologique selon l'invention.

Selon un autre aspect de l'invention l'analyseur est simplifié par le fait que le circuit de lyse comporte une réserve de liquide de lyse raccordée par un conduit, dit premier, muni d'une électrovanne interrupteur, a un segment de conduit d'une contenance prédéterminée, ce segment de conduit étant compris entre un point de jonction dudit premier conduit avec un conduit d'arrivée d'air commandée par une électrovanne interrupteur, et un point déterminé par la présence à proximité d'un détecteur, ce dernier point étant raccordé à la cuve de comptage des leucocytes.

Cette combinaison de caractéristiques permet une simplification du circuit de liquide de lyse qui en fonctionnement permet de délivrer à la cuve de comptage des leucocytes un volume de liquide de lyse sensiblement égal à ladite contenance prédéterminée. Ce circuit de lyse simplifié qui comporte seulement deux vannes interrupteurs et fonctionne comme dispositif doseur de liquide de lyse contribue également à la simplification de l'analyseur hématologique selon l'invention.

Selon encore un autre aspect de la présente invention le dispositif de prélèvement et de distribution comporte une pompe à piston mobile dans un cylindre et une micro-pompe à micro-tige plongeante dans un micro-cylindre, le piston et la micro-tige plongeante étant mécaniquement solidarisés de façon à ce qu'un moyen de commande mécanique unique associé leur assure un déplacement linéaire identique.

Cette solidarisation de la micro-pompe à la pompe, a l'avantage de simplifier l'analyseur selon l'invention en ne nécessitant qu'un seul moyen de commande mécanique tout en permettant d'obtenir une dilution précise de chaque micro-échantillon de sang total.

Enfin, selon encore un autre aspect de l'invention l'analyseur a un dispositif de prélèvement et de distribution de sang total simplifié et des circuits de fluide également simplifiés par le fait que cet analyseur comporte seulement seize électrovannes.

D'autres caractéristiques et avantages de la présente invention ressortiront d'ailleurs de la description qui va suivre, à titre d'exemple en référence aux dessins annexés où

la figure 1 est un schéma des circuits de fluides de l'analyseur, des pompes du dispositif de prélèvement et de distribution et du dispositif source de dépression/pression;

la figure 2 est une vue en perspective des pompes du dispositif de prélèvement et de distribution, avec leur moyen de commande mécanique unique associé ;

la figure 3 est une vue schématique de l'aiguille de prélèvement ;

la figure 4 est une vue en perspective d'une cuve de comptage en communication constante par un micro-orifice avec une cuve de détergent ;

la figure 5 est une vue agrandie du support du micro-orifice de la figure 4 ;

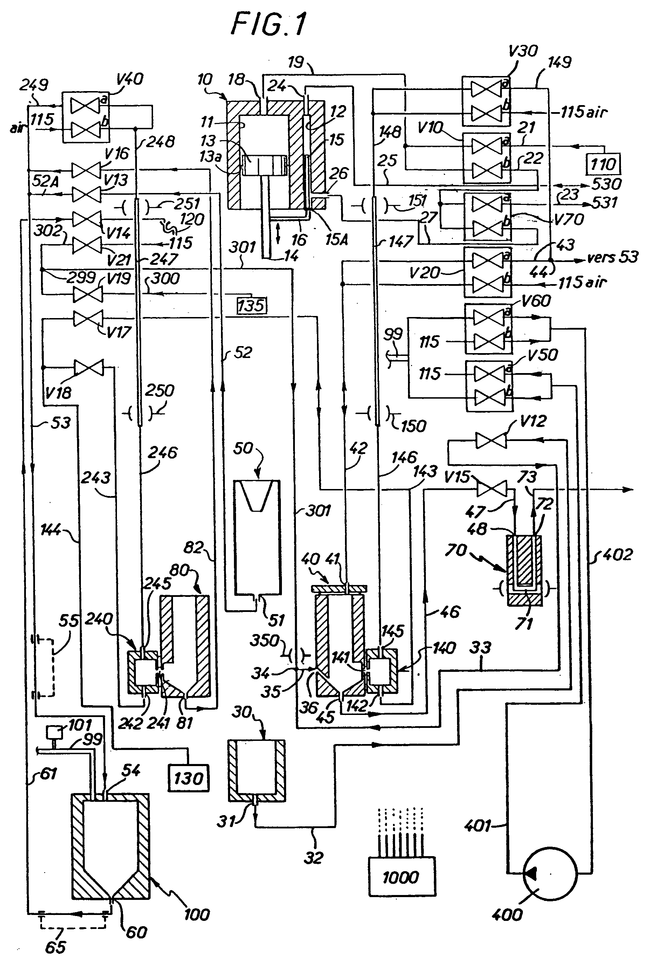

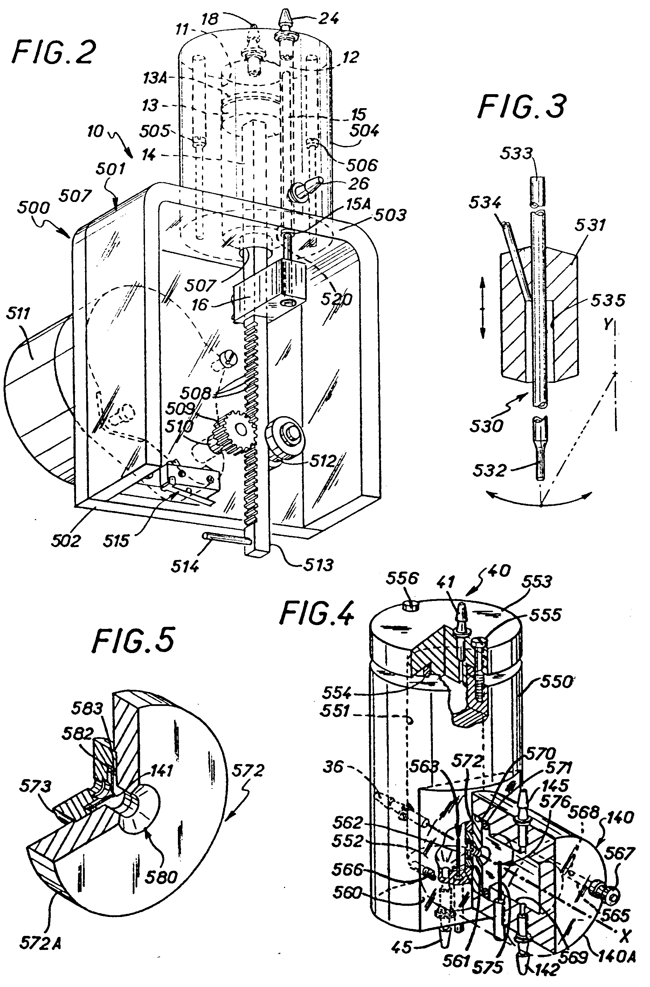

La figure 1 montre schématiquement les circuits des fluides de l'analyseur hématologique automatique selon l'invention. Cet analyseur comporte un disposif de prélèvement et de distribution 10 de sang et de liquide de dilution isotonique. Ce dispositif comporte une pompe constituée d'un cylindre 11 et d'un piston 13 fixé d'une manière habituelle au bout d'une tige 14 et d'une micro-pompe constituée par un micro-cylindre 12 dans lequel vient plonger une micro-tige 15. L'étanchéité du piston est assurée grâce à un joint 13A fixé à ce piston alors que l'étanchéité de la micro-seringue est assurée par un joint 15A entourant la micro-tige 15 et fixé à l'extrémité du micro-cylindre 12 où pénètre la micro-tige 15. Cette dernière est solidarisée par une entretoise 16 à la tige 14 de la pompe. L'embout 18 de la pompe est raccordé à une canalisation 19 qui peut être mise en communication au travers d'une vanne V10 dite inverseur, soit par sa demi-vanne V10a avec un conduit 21 allant jusqu'à une réserve de liquide de dilution isotonique 110, soit par sa demi-vanne V10b avec un conduit 22 qui peut être mis en communication au travers d'une vanne V70 inverseur, soit par sa demi-vanne V70a avec un conduit 23 raccordé à un anneau de rinçage 531 d'une aiguille creuse 530 de prélèvement de sang (voir figure 3), soit par sa demi-vanne V70b avec un conduit 27 raccordé à une entrée 26 débouchant à proximité du joint 15A dans le micro-cylindre 12. Une vanne dite interrupteur est une électrovanne à deux voies. Une vanne dite inverseur est une électrovanne à trois voies apte à faire communiquer une voie soit avec une deuxième, soit avec une troisième voie. Le dispositif de prélèvement et de distribution comporte ainsi deux électrovannes inverseurs V10 et V70, ainsi qu'au bout d'un bras orientable non représenté une aiguille creuse 530 raccordée à la micro-pompe. Dans la présente invention on utilise de préférence des électrovannes interrupteurs ou inverseurs du type à clampage, par exemple des vannes de fabrication Sirai. La micro-pompe possède un embout 24 qui est raccordé à un conduit 25 conduisant à l'aiguille creuse de prélèvement 530 qui sera décrit par la suite. Il faut remarquer que la tige plongeante 15 de la micro-pompe est d'un diamètre légèrement inférieur au cylindre 12 pour permettre la circulation du liquide de dilution entre l'orifice 26 et l'embout 24. L'aiguille 530 précitée est fixée d'une manière non représentée, au bout d'un bras qui peut prendre plusieurs positions dans l'espace de manière à coopérer avec le circuit de sang dilué ou de liquide de dilution dit circuit de dilution. Ce circuit de dilution comprend une cuve de prédilution 30 ouverte vers le haut, au-dessus de laquelle peut venir se placer l'aiguille 530 de prélèvement, et possédant à sa base un orifice d'évacuation 31 rattaché à un conduit 32 passant par une vanne interrupteur V12 et se continuant par un conduit 33 qui aboutit à un point déterminé 34 de jonction avec un conduit 301 de liquide de lyse. De ce point déterminé 34 part un court conduit 35 qui se raccorde à une entrée 36 de la cuve de comptage des leucocytes 40. Cette cuve 40 possède à sa partie supérieure une sortie 41 raccordée à un conduit 42 qui aboutit à une vanne inverseur V20 pour mise en communication soit par la demi-vanne V20b avec l'air 115, soit par la demi-vanne V20a avec un conduit 43 en communication avec une cuve de déchets 100.

Le conduit 43 possède un point de dérivation 44 pour un autre conduit 149 qui sera décrit par la suite. Le circuit de dilution possède également une cuve de rinçage 50 au-dessus de laquelle peut venir se placer l'aiguille 530 de prélèvement. A la base de cette cuve se trouve un orifice d'évacuation 51 raccordé à un conduit 52 qui mène à une vanne interrupteur V13 et qui se continue par un conduit 52A qui vient se raccorder à un conduit de collecte 53, raccordé lui-même à un orifice d'entrée 54 de la cuve de déchets 100. Sur ce conduit 53 est placé un détecteur constitué par un détecteur résistif 55 apte à discriminer entre la nature gazeuse non conductrice et la nature liquide conductrice du courant électrique du fluide circulant dans la canalisation 53. Cette cuve de déchets 100 possède dans son fond un orifice d'évacuation 60 raccordé à un conduit d'évacuation 61 qui aboutit à une vanne interrupteur V14, et qui se continue par un conduit aboutissant à un évier 120 pour mise à l'égout. Ce conduit d'évacuation 61 possède également un détecteur résistif 65 à proximité de l'orifice de sortie 60 de la cuve de déchets.

Le circuit de dilution comporte outre la cuve de comptage des leucocytes 40 la cuve de prédilution 30 et la cuve de rinçage 50 déjà mentionnées, une cuve de comptage des érythrocytes/plaquettes 80 et une cuve de détermination de l'hémoglobine 70.

La cuve de comptage des leucocytes 40 possède à sa partie inférieure un orifice d'évacuation 45 raccordé à un conduit 46 qui mène à une vanne interrupteur V15; cette vanne V15 se continue par un conduit 47 qui se raccorde à l'orifice d'entrée 48 d'une cuve de détermination de l'hémoglobine 70 par mesure de la cyan-méthémoglobine. Cette cuve d'un type connu en soit, peut être par exemple de la marque HELMA. D'une manière classique cette cuve contient une canalisation transparente située dans le trajet d'un faisceau lumineux émis par une diode puissante. De l'autre côté de cette diode une cellule photo-électrique mesure le faisceau transmis. Cette cuve possède un orifice de sortie 72 sur lequel est branché un conduit 73 qui vient se raccorder au conduit de collecte 53 allant vers la cuve de déchets 100. La cuve de comptage des érythrocytes/plaquettes 80 est ouverte vers le haut et apte à recevoir directement une solution diluée fournie par l'aiguille 530 de prélèvement et son anneau de rinçage 531 (voir figure 3). Le fond de cette cuve possède un orifice d'évacuation 81 raccordé à un conduit 82 qui mène à une vanne interrupteur V16 et qui se continue par un conduit se raccordant au tube de collecte 53. La cuve de comptage des leucocytes 40 et la cuve de comptage des érythrocytes/plaquettes 80 sont chacune associées à un circuit de liquide détergent. La cuve de comptage des leucocytes 40 est en communication constante par un micro-orifice 141 avec une cuve de liquide détergent 140. Cette cuve 140 possède à sa partie inférieure un orifice de sortie 142 qui est raccordé à un conduit 143 qui mène à une vanne interrupteur V17 qui se continue par un conduit 144 qui aboutit dans une réserve de liquide détergent 130. La cuve de liquide détergent 140 possède à sa partie supérieure un orifice de sortie 145 relié à un conduit 146 raccordé à un conduit de mesure constitué par un segment de tube capillaire 147 qui se continue par un conduit 148 aboutissant à une vanne inverseur V30. De la demi-vanne V30a part un conduit 149 qui vient se connecter au point de jonction 44 en direction de la cuve de déchets 100. La demi-vanne V30b communique avec l'air ambiant 115. De préférence le segment de tube capillaire 147 est sensiblement vertical et est muni à l'extérieur vers chacune de ses deux extrémités inférieure et supérieure d'un détecteur optique. Le détecteur optique disposé le plus près de la cuve 140 en suivant le conduit 146 est dénommé, détecteur de début de comptage 150. Le détecteur situé vers l'extrémité supérieur du tube capillaire 147 est dénommé détecteur de fin de comptage 151. Ce tube capillaire 147 connu en soi est un tube capillaire calibré. Les détecteurs 150 et 151 fonctionnent à l'aide d'un faisceau lumineux très étroit.

De la même manière la cuve de comptage des érythrocytes/plaquettes 80 est associé à un circuit de liquide détergent qui sera détaillé ci-après. La cuve 80 communique de manière constante par un micro-orifice 241 avec une cuve de liquide détergent 240. Cette cuve 240 est munie à sa partie inférieure d'un orifice 242 où se raccorde un conduit 243 qui conduit à une vanne interrupteur V18, et qui se continue par un conduit qui vient se brancher sur le conduit 144 aboutissant à la réserve de liquide détergent 130. La cuve de liquide détergent 240 possède à sa partie supérieure un orifice 245, qui est raccordé à un conduit 246 menant à un conduit de mesure constitué par un segment de tube capillaire 247 qui se continue par un conduit 248 aboutissant à une vanne inverseur V40. Ce conduit 248 communique soit par la demi-vanne V40a avec un conduit 249 qui se raccorde au conduit de collecte 53 soit par la demi-vanne V40b directement avec l'air 115. Comme dans le segment de tube capillaire 147 précédemment décrit, le capillaire 247 est muni à l'extérieur, vers chacune de ses extrémités d'un détecteur optique. Le détecteur 250 situé à proximité de la cuve 240 est dénommé ci-après détecteur de début de comptage des érythrocytes/plaquettes. Le second détecteur 251 situé vers l'extrémité supérieure du segment de tube capillaire 247 est dénommé par la suite détecteur de fin de comptage des érythrocyte/plaquettes. Comme dans le cas précédent le segment de tube capillaire 247 est de préférence orienté sensiblement verticalement.

Ainsi un circuit le liquide détergent comporte en série un conduit 144 apte à être plongé dans une réserve de liquide détergent 130 située à un niveau bas, ce conduit 144 menant à une vanne interrupteur V17 ou V18 et se continuant par un conduit 143 ou 243 qui aboutit à la base inférieure d'une cuve de détergent 140 ou 240 situé à un niveau moyen, cuve dont la partie supérieure continue vers le haut par un conduit 146 ou 246, raccordé à l'extrémité inférieure d'un conduit de mesure constitué par un segment de tube capillaire transparent 147 ou 247 sensiblement vertical, l'extrémité supérieure de ce tube capillaire étant raccordée par un conduit 148 ou 248 à une électrovanne inverseur V30 ou V40 de mise en communication soit avec l'air 115, soit avec un conduit 149 ou 249 raccordé à la cuve a déchets 100 donc au dispositif source de dépression/pression.

L'analyseur hématologique suivant l'invention comprend également un circuit de liquide de lyse. Un conduit de liquide de lyse 300 partant d'un réservoir de lyse 135 aboutit à une vanne interrupteur V19 puis à un point de jonction 299 et se continue par un segment de conduit 301 d'une contenance prédéterminée qui vient se brancher sur le point déterminé 34 de jonction avec le conduit 33. Ce segment de conduit 301 possède à proximité de sa jonction avec le point déterminé 34 un segment transparent autour duquel est fixé un détecteur optique 350. Ce détecteur optique est comme dans le cas des détecteurs optiques des segments de tube capillaire 147, 247, apte à discriminer entre la nature liquide ou gazeuse du fluide par mesure d'un étroit faisceau lumineux. A proximité de la vanne V19 vient se brancher sur le conduit 301 au point de jonction 299 un autre conduit 302 pouvant être mis en communication avec l'air 115 par une vanne interrupteur V21.

Le dispositif source de dépression/pression comprend une pompe pneumatique 400 raccordée à la cuve de déchets 100 d'une part et avec l'air ambiant, d'autre part. Cette pompe pneumatique 400 peut être constituée par exemple par une pompe de type N06KNE de la Société KNF. La sortie en surpression (refoulement) de cette pompe est raccordée à une canalisation 401 qui aboutit à une vanne inverseur V50. Cette vanne inverseur communique soit par la demi-vanne V50a avec l'air ambiant 115, soit par la demi-vanne V50b avec la cuve de déchets 100 par un conduit 99. De la même manière la sortie en dépression (aspiration) de cette pompe est raccordée avec une canalisation 402 qui aboutit à une vanne inverseur V60 qui peut communiquer, soit par la demi-vanne V60b avec l'air ambiant 115, soit par la demi-vanne V60a avec la cuve de déchets 100 par le conduit 99. Le conduit 99 possède en dérivation un manomètre 101 qui par l'intermédiaire de l'unité de commande et de calcul 1000 contrôle la pression établie à l'intérieur de la cuve à déchets 100. Cette pression peut être inférieure à la pression de l'air ambiant ou supérieure à celle-ci.

Ainsi dans cette forme de réalisation l'analyseur selon l'invention comporte seulement neuf électrovannes interrupteurs V12, V13, V14, V15, V16, V17, V18, V19, V21 et sept électrovannes inverseurs V10, V20, V30, V40, V50, V60, V70.

La figure 2 montre en détail le dispositif de prélèvement et de distribution 10 de sang total et de liquide de dilution isotonique. Ce dispositif comporte un bâti 500 consistant en un segment de profilé 501 en U globalement droit fermé d'un côté par une paroi 502 fixée selon la tranche de ce U. Sur la paroi médiane 503 extérieure de ce U est fixé un cylindre en plexiglas 504, à l'aide de deux vis 505, 506.

Ce cylindre 504 comporte un cylindre 11 obtenu par alésage non traversant du cylindre 504 ainsi qu'un micro cylindre 12 obtenu également par un alésage non traversant. Dans le cylindre 11 circule un piston 13 fixé d'une manière usuelle à l'extrémité d'une tige 14. Cette tige 14 grâce à une ouverture 507 pratiquée dans la paroi médiane du U se situe en partie à l'intérieur de l'espace défini par le segment de profilé 501 et la paroi 502. Cette tige 14 de section globalement carrée, comporte des dents 508 sur une de ses faces. Ces dents engrènent avec une roue dentée 509 de façon à former un accouplement du type crémaillère. La roue dentée 509 est montée sur arbre 510 qui traverse la paroi 502 et qui provient d'un moto-réducteur 511 fixé à l'extérieur du bâti 500 sur la paroi 502. De l'autre côté de la tige 14 en vis-à-vis de la roue dentée 509 un galet rotatif de support 512 s'appuie sur la face opposée 513 à la face portant les roues dentées 508. Cette disposition de roue dentée 509 et de galet 512 permet de positionner la tige 14 entre ces deux éléments, avec une grande précision. A son extrémité opposée à celle portant le piston 13, la tige 14 porte un téton 514 apte à coopérer avec un micro-contact 515 pour arrêter la course du piston 13 vers le fond du cylindre 504. Dans le micro-cylindre 12 plonge une micro-tige 15. Cette micro-tige traverse également la paroi médiane 503, grâce à un orifice approprié 520. La micro-tige 15 ayant un diamètre plus faible que celle du cylindre 12 correspondant, l'étanchéité est assurée par un joint 15A entourant la micro-tige et fixé à l'extrémité du micro-cylindre 12 où pénètre cette micro-tige. On remarque dans cette forme de réalisation que la pompe et la micro-pompe sont monoblocs, le cylindre 504 étant de préférence réalisé en une matière transparente afin qu'un opérateur puisse observer facilement le fonctionnement adéquat de ces pompes. L'extrémité de la tige 15 située à l'extérieur de la micro-pompe est solidarisée par une entretoise 16 à la tige 14 de la pompe. Cette disposition permet un déplacement linéaire identique du piston 13 et de la micro-tige 15 par un moyen de commande mécanique unique constitué ici par le moto-réducteur pas-à-pas 511. La pompe possède un embout 18 qui se raccorde au circuit de liquide diluant précédemment exposé. La micro-pompe possède un embout 24 et également une entrée 26 située près de l'extrémité portant le joint d'étanchéité 15A. Cette entrée 26 permet la circulation de liquide de dilution autour de la micro-tige 15 en direction de l'embout 24.

La figure 3 montre en détail l'aiguille de prélèvement 530, munie de son anneau de rinçage 531 raccordé par l'intermédiaire des demi-électrovannes V10b et V70a précités à l'embout 18 de la pompe. L'aiguille 530 se compose d'un tube creux se rétrécissant à une de ses extrémités 532, l'autre extrémité 533 étant fixée par un tuyau souple et le conduit 25 précité à l'embout 24 de la micro-seringue du dispositif 10. L'anneau de rinçage 531 qui coulisse à frottement doux autour de cette aiguille 530 possède un évidement cylindrique 535 relié à un petit tube 534 d'arrivée de liquide de dilution. D'une manière non représentée le tube 534 est raccordée par un tuyau souple à la conduite 23 précédemment citée. Ces dernières dispositions permettent la mobilité de l'aiguille 530 et de son anneau de rinçage 531 dans plusieurs orientations spatiales à l'aide du bras orientable non représenté sous la commande de l'unité centrale de commande et de calcul 1000. Cette aiguille et son anneau de rinçage peuvent venir se placer dans un déplacement en arc de cercle sensiblement horizontal au-dessus: d'un récipient ouvert contenant un échantillon, de la cuve de prédilution 30, de la cuve de rinçage 50, la cuve 80 de comptage des érythrocytes/plaquettes. Le bras orientable permet l'abaissement contrôlé de cette aiguille 530 dans la cuve choisie pour y prélever ou y délivrer sang et/ou liquide de dilution. Ainsi, l'aiguille 530 d'orientation sensiblement verticale, a son extrémité 532 qui parcourt une surface cylindrique de révolution autour d'un axe Y vertical.

La figure 4 montre en détail la cuve de comptage des leucocytes 40 associés à la cuve de liquide détergent 140.

La cuve de comptage 80 des érythrocytes est ouverte à la différence de la cuve des leucocytes 40 qui est fermée par un couvercle 553. Ces cuves 40, 80 permettent suivant un principe connu le comptage des éléments figurés du sang. La cuve de comptage des leucocytes 40 comporte un corps 550 qui est creusé par un alésage 551 formant chambre et se terminant par un évidement troncconique 552 à son extrémité inférieure. Cet évidement tronconique est percé d'un trou cylindrique qui communique avec l'embout extérieur 45. Ce corps 550 est fermé par le couvercle 553 à l'aide d'un joint torique 554 d'étanchéité et de deux vis 555 et 556.

Ce couvercle 553 est traversé par un orifice connecté à un embout 41. Vers le bas de l'alésage 551 et à proximité de l'évidement tronconique 552 débouche dans la cuve un orifice relié à l'extérieur par un embout 36. Le corps 550 qui a la forme extérieure d'un cylindre de révolution possède un méplat 560 pour recevoir la cuve de détergent 140. Ce méplat 560 comporte dans sa partie centrale un alésage 561 d'axe X qui fait communiquer l'extérieur de la cuve avec l'intérieur de l'alésage 551. Une électrode traverse le fond de la cuve pour se retrouver sous la forme d'une tige mince et courte 562 se dressant sensiblement d'une manière verticale au-dessus de l'évidement tronconique 552. La pointe 563 de cette tige 562 se trouve sensiblement au voisinage de l'axe X.

Deux vis parallèles entre elles 565 et 566 fixées dans le corps 550 de la cuve 40 émergent du méplat 560 d'une manière orthogonale. Ces vis sont destinées à coopérer avec des écrous correspondants 567 pour serrer la cuve de détergent 140 contre le méplat 560 de la cuve de comptage des leucocytes 40. La cuve de détergent 140 se présente sous la forme d'un court cylindre de révolution 140A dont le diamètre extérieur est voisin de la largeur du méplat 560. Ce cylindre possède un axe de révolution qui est confondu avec l'axe X lorsque la cuve de détergent 140 est en position serrée sur le méplat 560. Ce cylindre 140A possède parallèlement à son axe vers son bord extérieur deux alésages étroits 568 pour le passage des vis 566 et 565, de plus un alésage d'axe central X formant une chambre 569 munie d'un lamage 570 qui reçoit un joint torique d'étanchéité 571 et une pastille 572 dont la structure sera décrite ci-après.

La profondeur du lamage 570 est telle que le joint torique 571 pousse la pastille 572 vers le méplat 560 dans un contact élastique et étanche. Cette pastille 572 se présente sous la forme d'un jeton cylindrique en matière plastique possédant un décrochement cylindrique 573 qui pénètre à frottements doux dans l'alésage 561 de la cuve 40. La cuve de détergent 140 qui est fixée sur la cuve 40 possède également une électrode 575 dans sa chambre 569 de telle façon que cette électrode soit sensiblement parallèle à l'électrode correspondante 562 située dans la cuve de comptage 40. L'extrémité 576 de cette électrode 575 est voisine de l'axe X défini précédemment. La chambre 569 possède également des communications avec l'extérieur par les orifices inférieurs et supérieurs 142, 145.

La pastille 572 mieux visible à la figure 5 possède un orifice central macroscopique 580, aligné avec un micro-orifice cylindrique 141 d'un rubis percé par un rayon laser. Ce rubis est enserré entre deux joints toriques d'étanchéité 582 et 583 serrés entre la pièce cylindrique en décrochement 573 et le corps 572A de pastille 572. La pièce 573 et le corps 572A sont serties ou collés entre eux. Le micro-orifice 141 est dans le cas d'une pastille destinée à la cuve de comptage des leucocytes 40, de l'ordre de 80 micromètres de diamètre. La pastille utilisée dans la cuve de comptage des érythrocytes/plaquettes possède un micro-orifice 241 de diamètre de l'ordre de 60 micromètres. L'installation des électrodes et des micro-orifices ainsi décrits repose sur le principe connu du comptage des particules lorsqu'elles traversent le micro-orifice où circule un courant électrique. Ce franchissement de l'orifice provoque une variation d'impédance qui peut être enregistrée par l'unité centrale de commande et de calcul 1000. L'amplitude de l'impulsion est linéairement proportionnel au volume de la particule.

Le fonctionnement de l'analyseur hématologique automatique va être maintenant décrit.

Cet analyseur a besoin pour fonctionner d'une réserve de liquide de dilution isotonique 110, d'une réserve de liquide de lyse 135 et d'une réserve de liquide détergent 130. Ces trois liquides doivent être compatibles entre eux et l'on trouve dans le commerce de tels assortiments.

Le liquide de dilution est isotonique avec le sang de façon à ne pas provoquer de modifications de volume des éléments figurés du sang.

Le liquide de lyse qui contient entre autres composés un composé du cyanure provoque la lyse des érythrocytes et la formation de cyan-méthémoglobine.

Certains liquides de lyse commercialement disponibles permettent la discrimination des leucocytes par l'analyseur selon la présente invention en granulocytes, lymphocytes et monocytes par des modifications sélectives de leur volume rendant ainsi possible leur discrimination par les mesures de variation d'impédance exposées ci-dessus.

Le liquide détergent permet d'obtenir de beaux ménisques de séparation air/liquide et un bon glissement à l'intérieur des tubes capillaires 147 et 247.

Avant de démarrer l'analyseur selon l'invention l'extrémité du conduit 21 est plongée dans la réserve de liquide de dilution 110 ; l'extrémité du conduit 144 est plongée dans la réserve de Liquide détergent 130 dont le niveau doit être situé plus bas que les cuves de liquide détergent 140 et 240 ; l'extrémité du conduit 300 est plongée dans une réserve de liquide de lyse 135, et l'extrémité du conduit de vidange 61 est engagée dans un siphon d'évacuation de l'évier 120.

A la mise en route de l'analyseur, l'unité de commande et de calcul va enclencher un programme de comptage à blanc avec détermination à blanc des paramètres de mesure de comptage des érythrocytes, des plaquettes (thrombocytes), des leucocytes, et mesure à blanc de l'hémoglobine. Pendant ce cycle les trois liquides suivants seront amorcés :

- Le liquide isotonique avec pour seule différence la suppression, de la séquence de prise d'échantillon de 40μl qui sera explicitée ci-après.

- Le liquide de lyse : pendant le cycle de commande du circuit de liquide de lyse, en cas d'anomalies, l'opérateur peut procéder à un amorçage complémentaire ; la cuve de comptage des leucocytes 40 est ainsi mise en dépression grâce à la cuve de déchets 100. La vanne V21 est ouverte puis fermée pour que la canalisation 301 contienne de l'air. La cuve 40 restant en dépression, la vanne V15 étant ouverte, la vanne V20b est fermée et la vanne 19 du conduit 300 de liquide de lyse est ouverte pendant environ 4 secondes. Le détecteur optique 350 décèle le passage du liquide de manière continue sans bulle. Si le détecteur ne décèle que de l'air, l'opération d'aspiration de liquide de lyse est relancée pendant de nouveau 4 secondes. Si le détecteur 350 ne décèle pas du liquide, un signal d'alarme retenti pour alerter l'opérateur. Si le détecteur 350 a décelé du liquide sans bulle, l'opération d'amorçage est arrêtée.

- Le liquide détergent : De la même manière que le cycle d'activation du liquide détergent qui sera décrit par la suite.

Si ces paramètres de mesure sont inférieurs à des seuils prédéterminés, l'analyseur se met en attente d'une analyse d'un échantillon de sang.

L'opérateur introduit alors un godet ou un tube de sang dans un portoir non représenté fixé sur le devant à l'extérieur de l'analyseur.

Le portoir est repoussé, ce qui a pour effet de fermer un contact, cette fermeture est analysée par l'unité centrale et de commande comme le signal départ de la mise en route du programme pour analyser l'échantillon contenu dans le godet ou tube.

Ce départ manuel, peut être remplacé par la présentation commandée d'une série d'échantillons de sang présentés successivement par un échantillonneur.

L'unité centrale 1000 commande en parallèle la vidange de la cuve à déchets 100 et la fermeture de la vanne V70b (donc l'ouverture de la vanne V70a) et la fermeture de la vanne V10b (donc l'ouverture de la vanne V10a), puis commande la mise en position de l'aiguille de prélèvement 530 au-dessus du godet de sang puis sa descente vers celui-ci. Pendant cette descente alors que l'aiguille 530 est encore non immergée dans le sang, la tige 14 est commandée en retrait de façon à agrandir le volume des chambres des pompes.

Du liquide de dilution entre dans le conduit 21 et un segment d'air entre dans l'aiguille 530 par l'extrémité 532. Le mouvement en retrait de la tige 14 est stoppé avant que l'extrémité 532 n'atteigne la surface du sang.

L'aiguille 530 s'arrête dans son mouvement descendant à une distance prédéterminée du fond du godet et un deuxième retrait de la tige 14 est commandé de façon à prélever dans l'aiguille un segment, de 40 μl de sang surmonté d'une bulle d'air constituée à partir du segment d'air formé précédemment. Cette bulle d'air isole le sang du liquide de dilution isotonique. L'aiguille 530 est sortie de l'échantillon de sang, puis le piston 14 est commandé une troisième fois en retrait de façon à introduire dans l'aiguille 530 et/ou dans le conduit de tuyau souple 25 qui lui est raccordé, un long segment d'air. L'extrémité 532 a une forme géométrique telle que aucune goutte de sang résultante de l'écoulement des traces de sang sur l'extérieur de l'aiguille ne puisse être aspirée dans l'aiguille.

L'aiguille vient se positionner ensuite au-dessus et à proximité de l'ouverture supérieure de la cuve de rinçage 50.

La vanne V70b reste fermée par contre la vanne V10 est basculée vers l'état V10b ouvert (donc V10a fermé) puis la tige 14 est repoussée, ce qui propulse les fluides hors de leur pompe respective. Le liquide de dilution repoussé par le piston 13 repousse le liquide de dilution dans les conduits 19, 22, 23, arrive dans le tube 534 et dans l'anneau 531 et, de là, rince toute la partie de l'aiguille située dans et à partir de l'évidement 533. Ce liquide ruisselle sur l'extérieur de l'aiguille 530 et tombe ensuie dans la cuve de rinçage 50. D'une manière concommitante la micro-tige 15 repousse alors les segments de fluide contenu entre l'extrémité 532 de l'aiguille et la micro-pompe. Le déplacement précédent de la tige 14 est prédéterminé de façon à ce que seule une partie du long segment d'air soit expulsé de l'aiguille .

Cette opération de rinçage de l'aiguille a pour but d'éviter toute contamination ultérieure du circuit de dilution par des traces de sang total.

L'aiguille vient alors se positionner au-dessus de la cuve de prédilution 30, la vanne V12 étant fermée. La cuve de déchets 100 est mise en dépression grâce à la pompe 400 qui est actionnée, les moitiés de vannes V60a et V50a étant ouvertes (ce qui a pour corollaire que les moitiés de vannes V60b et V50b sont fermées). Les vannes V12, V13, V16, V15, V17, V18, V40a, V30a, V19, V21 étant fermées, l'ouverture de la vanne V20a crée une dépression dans la cuve de comptage des leucocytes 40. Le contenu air ou liquide de dilution de la cuve de prédilution 30 est transféré par ouverture de la vanne V12 dans la cuve de comptage des leucocytes 40.

La vidange en parallèle des cuves 80, 50, 40 est effectuée avec une temporisation $t_1$. La vanne V15 est ouverte ce qui entraîne le liquide de dilution de la cuve de comptage des leucocytes 40 dans la cuve 70 de mesure de l'hémoglobine en effectuant son rincage avant de passer dans le détecteur résistif 55 et de tomber dans la cuve de déchets 100. Lorsque le détecteur 55 ne décèle plus de liquide l'opération de vidange est arrêtée par la fermeture de la vanne V15.

La cuve de comptage des érythrocytes/plaquettes 80 est vidangée par ouverture de la vanne V16 sous la surveillance du dispositif de détection à résistivité 55. La cuve de rinçage 50 est vidangée à son tour par l'ouverture de la vanne V13 et sous la surveillance du détecteur 55.

La vanne V12 restant dans la position fermée, la tige 14 est alors repoussée sur une certaine longueur prédéterminée après l'ouverture de la vanne V11. Les 40 $\mu$l de sang et la petite bulle d'air sont expulsés de l'aiguille 530 et le circuit allant de l'entrée 26 à l'embout 24, puis au conduit 25 conduisant à l'aiguille est abondament rincé par le volume prédéterminé de liquide de dilution arrivant par le conduit 22. Les jets en provenance de l'aiguille 530 et de l'anneau de rinçage 531 provoquent un mélange homogène sang/liquide de dilution dans la cuve de prédilution 30. Après cette opération le mélange contenu dans la cuve de prédilution 30 est à une dilution $d_1$ égale à 1/200. Autrement dit aux 40 $\mu$l de sang ont été mélangés 199 fois 40 $\mu$l de liquide de dilution . La valeur de $d_1$ est prédéterminée par le volume de liquide expulsé par le piston 13.

L'aiguille 530 amorce alors une descente vers le contenu de la cuve de prédilution 30 en aspirant une petite bulle d'air comme dans le cas du prélèvement de sang total exposé ci-dessus, puis plonge dans le mélange et aspire 40 $\mu$l de mélange dilué $d_1$. L'aiguille ressort tout en restant au-dessus de la cuve de dilution 30 et une grande bulle d'air est aspirée dans l'aiguille et le conduit 25.

L'aiguille 530 est positionnée par le dispositif de commande mécanique non représenté au-dessus de la cuve des érythrocytes/plaquettes 80 . L'unité centrale de commande et de calcul provoque le rinçage de l'extérieur de l'aiguille, la vidange de la cuve des érythrocytes/plaquettes 80, puis son rinçage suivi d'une nouvelle vidange. Les 40 $\mu$l de mélange dilué sont ensuite expulsés avec du liquide de dilution isotonique de façon à obtenir un mélange de dilution $d_2$ prédéterminé par la commande qui consiste à maintenir fermée la demi-électrovanne V70b, à ouvrir V10b et à repousser le piston 13, puis à basculer l'électrovanne V70 (ouverture de V70b) pour expulser le liquide de dilution par l'intérieur de l'aiguille afin de brasser le mélange dans la cuve 80.

De préférence cette dilution $d_2$ est choisie au 1/40000ème du sang prélevé initialement.

A ce moment l'analyseur hématologique selon l'invention est dans la situation où la cuve des érythrocytes/plaquettes 80 contient une solution de sang au 1/40 000ème.

Le circuit de lyse est commandé de la manière suivante: la vanne V15 est fermée, la vanne V20a est ouverte pour mettre en dépression la cuve de comptage des leucocytes 40. La vanne V21 est ouverte pendant un temps très bref et aussitôt refermée pour introduire une bulle d'air dans le conduit 301, puis la vanne V19 est ouverte. Cette ouverture entraîne le liquide de lyse compris entre la bulle d'air et le détecteur 350 à pénétrer dans la cuve de comptage des leucocytes 40 par l'orifice d'entrée 36. En effet dès que le détecteur décèle la bulle d'air la vanne V19 du liquide de lyse est fermée. L'unité centrale de commande surveille le temps écoulé entre l'ouverture de la vanne V19 et l'arrivée de la bulle d'air. Si la bulle d'air arrive trop tôt ou trop tard par rapport à un intervalle de temps prédéterminé, l'unité de commande considère qu'il y a une erreur et un nouveau cycle d'introduction de liquide de lyse dans la cuve de comptage des leucocytes 40 est lancé. Si cette dernière opération est encore infructueuse un signal d'erreur est généré pour l'opérateur du système qui, après vérification de la réserve de liquide de lyse pourra par l'intermédiaire du programme de service procéder à un amorçage complémentaire. En cas de cycle réussi un volume V précis compris entre 0,90 et 1,10ml de liquide de lyse est introduit et demeure dans la cuve de comptage des leucocytes 40.

La solution de dilution $d_1$ est alors transférée par le conduit 32, la jonction 34 et l'orifice d'entrée 36 dans la cuve de comptage des leucocytes 40. Cette solution $d_1$ se mélange intimement au liquide de lyse qui fait éclater les globules rouges ou érythrocytes et transforme l'hémoglobine en cyanméthémoglobine.

A ce moment du cycle, l'analyseur hématologique comporte une solution diluée $d_2$ dans la cuve de comptage des érythrocytes/plaquettes 80 pour le comptage des érythrocytes et des thrombocytes et une solution diluée et lysée $d_3$ dans la cuve de comptage des leucocytes pour le comptage des leucocytes.

La dilution $d_3$ est calculée par l'unité centrale à partir du volume de solution $d_1$ et du volume de solution de lyse ajouté.

L'unité centrale de commande active ensuite le cicuit de liquide détergent. Les vannes V17, V18, V30a et V40a sont ouvertes. Les conduits 148, 248 sont mis en communication par le conduit 53 avec la cuve des déchets 100 mise en dépression.

Du liquide détergent et/ou de l'air sont aspirés pendant un temps prédéterminé $t_2$ par les conduits 143 et 243 dans les cuves respectives 140 et 240 pour ressortir par les orifices supérieurs 145 et 245 par les conduits 146 et 246. Ces colonnes montantes de fluides passent dans les capillaires respectifs 147 et 247 et la nature gazeuse ou liquide de ces colonnes est constamment décelée par les détecteurs optiques 150, 151 et 250, 251. Si les détecteurs ne décèlent que de l'air ou des bulles d'air, le cycle d'aspiration de liquide détergent est renouvelé pendant un second cycle de durée $t_3$. Si vers la fin de ce cycle les détecteurs ne décèlent pas de liquide, un signal d'erreur est généré par l'unité centrale de commande pour l'opérateur. Si les détecteurs n'ont pas décelé d'anomalie, une petite quantité du liquide détergent sera passée par les vannes V40a et V30a et aura abouti dans la cuve des déchets 100, et l'opération de descente du liquide détergent est lancée séquentiellement par l'unité centrale. La vanne V17 est fermée et les vannes V40, V30 sont basculées de façon à ouvrir V40b et V30b. Le liquide détergent va descendre dans le tube capillaire 247 dit des rouges, par un effet de vase communiquant avec la réserve de liquide détergent 130. Cette descente est arrêtée lorsque le ménisque air/liquide détergent se situe dans le conduit 246 en dessous du détecteur de début de comptage 250, par la fermeture à un temps prédéterminé de la vanne V18. La descente de la colonne de liquide détergent dans le capillaire 147 est réalisée par l'ouverture pendant un temps prédéterminé de la vanne V17 de façon à ce que le ménisque air/liquide détergent descende dans le conduit 146 en dessous du détecteur de début de comptage 150.

Ce procédé mettant en oeuvre une auto-descente des colonnes de liquides en dessous des détecteurs de début de comptage 150 et 250 sous la seule action de la gravité par un effet de vase communiquant avec la réserve de liquide détergent 130 simplifie l'analyseur et permet de se passer d'un certain nombre de vannes supplémentaires.

La vanne V20a est fermée (donc ouverture de la vanne V20b).

La vanne V15 est ouverte pendant un court instant de façon à transférer la solution $d_3$ lysée dans la cuve 70 de détermination de l'hémoglobine par spectrophotométrie.

L'aiguille 530 vient alors se positionner au-dessus de la cuve de prédilution 30, la vanne V12 étant fermée. Le piston 13 et la micro-tige 15 sont alors de nouveau repoussés sur une longueur prédéterminée, la vanne V70b étant fermée et la vanne V10b étant ouverte de façon à ce que l'anneau 531 de l'aiguille 530 expulse environ 1 à quelques ml de liquide de dilution isotonique qui sont recueillis dans la cuve de prédilution 30.

La cuve de déchets 100 est amenée à une dépression de 200 mbars (millibars), la tension de sonde est établie dans les cuves associées 40-140 et 80-240 à environ 12V chacune.

Par exemple, pour les cuves associées 40, 140, une tension d'environ 12V est établie entre les électrodes 562 et 575.

Les vannes V30a et V40a sont ouvertes simultanément alors que les vannes V17 et V18 restent fermées. Sous l'action de la dépression les colonnes de liquide détergent vont remonter dans leurs colonnes capillaires respectives 147 et 247 à des vitesses différentes. En effet, la remontée va être plus rapide pour la colonne capillaire branchée sur la cuve de détergent 140 associée à la cuve de comptage des leucocytes 40, car l'orifice circulaire 141 du rubis est d'un diamètre de 80 $\mu$m au lieu de 60 $\mu$m pour l'orifice du rubis 241 de la cuve 80 associée à la cuve de détergent 240.

Les montées de colonne de liquide entraînent respectivement le passage de la solution de la cuve de comptage des érythrocytes/plaquettes 80 à la cuve de liquide détergent 240 par le micro-orifice 241 et le passage de la solution de la cuve de comptage des leucocytes 40 à la cuve de liquide de détergent 140.

En ce qui concerne la cuve des érythrocytes 80, le franchissement par une particule de l'orifice 241 va modifier l'impédance du circuit électrique créé entre les électrodes des cuves 80 et 240 et générer un signal selon un principe connu de l'homme du métier. Ce signal est sensiblement proportionnel au volume de la particule qui perturbe ainsi le champ électrique et il est ainsi possible pour l'unité de commande et de calcul de discriminer entre le passage d'un érythrocyte et le passage d'un thrombocyte. Le comptage de ces éléments figurés du sang a lieu pour une remontée de 200 $\mu$l de liquide entre le franchissement du détecteur de début de comptage 250 par le ménisque air/liquide détergent et le franchissement du détecteur de fin de comptage 251 par ce même ménisque.

Le fonctionnement est identique pour le comptage des leucocytes à partir de la cuve des leucocytes 40.

Après ces comptages, la cuve de déchets 100 est mise en dépression grâce à la pompe 400 qui est actionnée alors que les moitiés d'électrovannes V60a et V50a sont en position ouverte (ce qui a pour corollaire que les moitiés de vanne V60b et V50b sont en position fermée). Les vannes V12, V13, V15, V16, V17, V18, V19, V21, V30a, V40a étant fermées, l'ouverture de la demi-électrovanne V20a crée une dépression dans la cuve de comptage des leucocytes 40. L'ouverture de la vanne V12 permet de transvaser le contenu en liquide de dilution de la cuve de prédilution 30 dans la cuve de comptage des leucocytes 40 avec pour effet de rincer les conduits 32, 33, 35. Puis la vanne V20 est basculée dans la position V20a fermée donc V20b ouverte ce qui a pour effet de mettre la cuve de comptage des leucocytes à la pression de l'air ambiant.

L'analyseur hématologique est prêt pour une nouvelle détermination. D'une manière régulière, l'unité de commande provoque la vidange à l'évier 120 de la cuve à déchets 100, par mise en surpression de celle-ci grâce à l' actionnement de la pompe 300, de l' ouverture des demi-électrovanne V50b et V60b et de l'électrovanne V14.

Si au bout de trois minutes un nouvel échantillon n'a pas été mis dans le portoir et celui-ci basculé, l'analyseur réalise un rinçage par du liquide de dilution déverse par l'aiguille 530 et son anneau de rinçage 531 dans la cuve de prédilution 30. Le contenu de la cuve de prédilution 30 est transféré dans la cuve de comptage des leucocytes 40.

Au bout de 15 minutes de non-présentation d'échantillon un cycle général de rinçage des cuves 30, 40, 70, 80, a lieu et l'appareil se met en position de veille.

Dans une forme de réalisation complémentaire de celle de l'analyseur hématologique qui a été décrite ci-dessus, la cuve de prédilution 30 peut se mettre en avant grâce à une articulation mobile. L'opérateur peut apporter directement une solution de sang prédilué dans cette cuve 30 puis la repousser, ce qui a pour effet d'envoyer un signal à l'unité centrale de commande et de calcul 1000 qui ne commande pas alors le déroulement des opérations de prélèvement de sang total et de première dilution. Par contre le reste des opérations reste identique à ce qui a été déjà décrit ci-dessus.

## Revendications

1. Analyseur hématologique automatique comprenant en combinaison :

un dispositif de prélèvement et de distribution (10) de sang total et d'un liquide de dilution,

un circuit de sang dilué ou de liquide de dilution (30, 32, V12, 33, 34, 35, 40, 50, 142, V15, 70, 73, 53 ; 80, 82, V16, 53) comportant au moins une cuve de comptage (40, 80) des éléments figurés du sang,

un circuit de liquide détergent (130, 144, V17, 143, 140, 146, 147, 148, V30, 115, 149, 53 ; 130, 144, V18, 243, 240, 246, 247, 248, V40, 115, 249, 53) comprenant au moins une cuve de liquide détergent (140, 240), chaque cuve de liquide détergent étant en communication constante par un micro-orifice (141, 241) avec une cuve de comptage associée (40, 80),

le circuit de liquide détergent comprenant également un moyen de mesure associé (147, 150, 151 ; 247, 250, 251) à chaque cuve de liquide détergent (140, 240) et apte en fonctionnement à déterminer le temps de passage par le micro-orifice (141, 241) d'un volume prédéterminé de sang dilué, de la cuve de comptage (40, 80) à la cuve de détergent (140, 240),

un circuit de liquide de lyse de sang (135, V19, V21, 115, 299, 301, 34, 35) apte à être mis en communication avec une cuve de comptage (80),

les circuits comportant des vannes commandées (V10, V20, V30, V40, V50, V60, V70, V12, V13, V14, V15, V16, V17, V18, V19, V21) et des détecteurs (55, 65, 150, 151, 250, 251, 350) de la nature liquide ou gazeuse des fluides de circulation,

les circuits étant raccordés à un dispositif source de dépression/pression (100, 400) et à l'air ambiant pour la circulation de l'air et/ou des liquides,

le dispositif, les détecteurs, les vannes et chaque moyen de mesure étant commandés par une unité centrale de commande et de calcul(1000), caractérisé en ce que le circuit de liquide de lyse comporte une réserve de liquide de lyse (135) raccordée par un conduit (300), dit premier, muni d'une électrovanne interrupteur (V19), à un segment de conduit (301) d'une contenance prédéterminée, ce segment de conduit étant compris entre un point de jonction (299) dudit premier conduit avec un conduit (302) d'arrivée d'air (115) commandée par une électrovanne interrupteur (V21) et un point déterminé (34) par la présence à proximité d'un dispositif de détection (350), ce dernier point (34) était raccordé à la cuve de comptage (80).

2. Analyseur hématologique automatique selon la revendication 1, caractérisé en ce que le dispositif de prélèvement et de distribution (10) comporte une pompe à piston mobile (13) dans un cylindre (11) et une micro-pompe à micro-tige plongeante (15) dans un micro-cylindre (12), le piston (13) et la micro-tige plongeante (15) étant mécaniquement solidarisés de façon à ce qu'un moyen de commande mécanique unique (508, 509, 511) associé leur assure un déplacement linéaire identique.

3. Analyseur selon la revendication 2, caractérisé en ce que ledit piston (13) est fixé à l'extrémité d'une tige (14) comportant des dents (508) qui engrènent avec une roue dentée (509) du moyen de commande mécanique (511) dans un accouplement du type crémaillère.

4. Analyseur selon l'une quelconque des revendications 1 à 3, caractérisé en ce que le circuit de sang dilué ou de liquide de dilution comporte une cuve de prédilution (30), une cuve de rinçage (50), une cuve de comptage des leucocytes (40), une cuve de comptage des érythrocytes/plaquettes (80) et une cuve de détermination de l'hémoglobine (70).

5. Analyseur selon la revendication 4, caractérisé en ce que le dispositif de prélèvement et de distribution (10) comporte au bout d'un bras articulé une aiguille creuse (530) de prélèvement et de distribution apte en fonctionnement à venir se placer au dessus de la cuve de rinçage (50), au dessus de la cuve de prédilution (30) et au dessus de la cuve de comptage des érythrocytes/plaquettes (80).

6. Analyseur selon l'une quelconque des revendications 1 à 5, caractérisé en ce que le dispositif source de dépression/pression comprend une pompe pneumatique (400) raccordée à une cuve à déchets (100) qui recueille l'air et/ou les liquides.

7. Analyseur selon l'une quelconque des revendications 1 à 6, caractérisé en ce que le dispositif de prélèvement et de distribution (10) comporte deux électrovannes inverseurs (V10, V70).

8. Analyseur selon l'une quelconque des revendications 1 à 7, caractérisé en ce qu'il comporte seulement seize électrovannes (V10, V20, V30, V40, V50, V60, V70, V12, V13, V14, V15, V16, V17, V18, V19, V21).

9. Analyseur selon l'une quelconque des revendications 1 à 8, caractérisé en ce qu'il comporte seulement sept électrovannes inverseurs (V10, V20, V30, V40, V50, V60, V70) et neuf électrovannes interrupteurs (V12, V13, V14, V15, V16, V17, V18, V19, V21).

EP 0 510 722 A1

## FIG.1

12

FIG.2

FIG.3

FIG.5

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| A | US-A-3 549 994 (COULTER)<br>* abrégé; figure 1 *<br>--- | 1 | G01N15/12 |
| A | WO-A-8 700 280 (CELLTRACK)<br>* page 18, ligne 18 - page 19, ligne 7; figure 2 * | 1 | |
| | ----- | | |

**DOMAINES TECHNIQUES RECHERCHES (Int. Cl.4 )**

G01N

Le présent rapport a été établi pour toutes les revendications

| Lieu de la recherche | Date d'achèvement de la recherche | Examinateur |
|---|---|---|
| LA HAYE | 23 JUILLET 1992 | HOCQUET A. P. |

EPO FORM 1503 03.82 (P0402)